# EUROPÄISCHE PATENTSCHRIFT

(11) **EP 2 093 642 B1**
(45) Veröffentlichungstag und Bekanntmachung des Hinweises auf die Patenterteilung: **08.02.2012**
(21) Anmeldenummer: 08003350.9
(22) Anmeldetag: 25.02.2008
(51) Int. Cl.: G05B 19/416, B23Q 16/10

(54) **Drehtisch mit einer zugeordneten Steuerung oder Regelung**
Rotary table with an associated control or regulation unit
Table rotative avec une unité de contrôle ou regulation associée

(43) Veröffentlichungstag der Anmeldung: 26.08.2009
(73) Patentinhaber: TÜNKERS MASCHINENBAU GmbH, 40880 Ratingen (DE)
(72) Erfinder: Tünkers, Olaf, D-40885 Ratingen (DE)
(74) Vertreter: Beyer, Rudi

(56) Entgegenhaltungen:
- EP-A- 0 585 581
- EP-A- 1 262 845
- EP-B- 0 643 636
- DE-A1- 3 314 105
- DE-C1- 19 632 910

## Beschreibung

Die Erfindung betrifft einen Drehtisch mit einer zugeordneten Steuerung oder Regelung mit einer Antriebswalze, die über einen motorischen Antrieb drehangetrieben ist, wobei die Antriebswalze eine Antriebsnut aufweist, in die Rastbolzen oder Rollenbolzen eingreifen, wobei die Bewegungscharakteristik wie Beschleunigung, Abbremsen und sonstige Drehbewegungen einer Tischplatte von der Ausbildung der Antriebsnut abhängt, und die Tischplatte zur Aufnahme von zu bearbeitenden Werkstücken dient, die die Tischplatte schrittweise in Bearbeitungs-oder Werkstückaufnahme bzw. Austragungsposition gesteuert bewegt.

Des weiteren betrifft die Erfindung eine Steuerung oder Regelung für einen Drehtisch mit einer Antriebswalze, die über einen motorischen Antrieb drehangetrieben ist, wobei die Antriebswalze eine Antriebsnut aufweist, in die Rastbolzen oder Rollenbolzen eingreifen, wobei die Bewegungscharakteristik wie Beschleunigung, Abbremsen und sonstige Drehbewegungen einer Tischplatte von der Ausbildung der Antriebsnut abhängt, und die Tischplatte zur Aufnahme von zu bearbeitenden Werkstücken dient, die die Tischplatte schrittweise in Bearbeitungs- oder Werkstückaufnahme bzw. Austragungsposition gesteuert bewegt, wobei der Antriebswalze ein Betätigungselement zugeordnet ist, das sich mit der Antriebswalze dreht und ein als Halter ausgebildetes induktives Ringsensorelement mit mehreren Sensoren bedämpft, wobei das Ringsensorelement die Antriebswalze und das Betätigungselement mit Spaltabstand umschließt und die Position der Antriebswalze durch induktive Messung über 360° erfasst, und die ermittelten Signale an einen Mikroprozessor oder an mehrere Mikroprozessoren weitergibt, der bzw. die in eine Steuer- oder Regelvorrichtung einbezogen ist bzw. sind, wobei der betreffende Mikroprozessor die Daten verarbeitet und/oder abspeichert und auswertet und an die Steuer- oder Regelvorrichtung weiterleitet, die das Überfahren der sogenannten Nullposition überwacht, wobei während der Drehung innerhalb eines Rastwinkels (α) last- und drehzahlabhängig ein elektrischer Motor abgeschaltet und wieder eingeschaltet wird, derart, dass für Drehbewegungen "schnell" und "langsam" getrennte Schaltpunkte vorhanden sind, mit einer Blackbox, die dem Ringsensor-element funktional zugeordnet ist, die in die Steuerung oder Regelung des Drehtisches einbezogen ist und kundenspezifische Applikationen aufweist, wobei die Blackbox Eingangssignale von der induktiven Messvorrichtung als Analogwert oder serielles Signal erhält und dadurch Drehrichtung, Nulllage und die Drehgeschwindigkeit sowie etwaige Toleranzwerte erfasst.

Aus der EP 0 643 636 B1 sind Drehtische mit einem Schrittantrieb mit einer durch Wälzlager drehbar auf der Oberseite eines Gehäuses gelagerten Tischplatte vorbekannt, von deren Unterseite mehrere, in gleichmäßigen Winkelabständen versetzt auf dem gleichen Durchmesser angeordneten Antriebsbolzen vortreten, welche in eine Steuernut in einer im Gehäuse gelagerten, motorisch antreibbaren Antriebswalze eingreifen, wobei der Verlauf der Steuernut die Charakteristik der Drehbewegung der Tischplatte bestimmt. Die kreisförmig begrenzte Tischplatte hat einen Durchmesser, der größer ist als der zugeordnete obere, ebenfalls kreisförmig begrenzte, den Lagerbereich bildende Bereich des Gehäuses. Der das Gehäuse radial überragende Bereich der Tischplatte ist in seiner Dicke in Abwärtsrichtung derart verstärkt, dass er den Lagerbereich des Gehäuses in Abwärtsrichtung etwas umgreift. In der radial nach außen weisenden Wand des Gehäuses sind im Lagerbereich die gehäuseseitigen Laufbahnen des Wälzlagers für die Tischplatte ausgebildet. An der nach unten weisenden Fläche des das Gehäuse im Lagerbereich nach unten umgreifenden Tischplatten-Randbereichs ist ein Lagerring lösbar befestigt, wobei in der den Laufbahnen im Gehäuse gegenüberliegenden Innenfläche der Tischplatte die teilweise im übergreifenden äußeren Tischplatten-Randbereich und teilweise im Lagerring liegenden Laufbahnen für die tischplattenseitige Lagerung der Wälzkörper ausgebildet sind. Die gehäuseseitigen Laufbahnen des Wälzlagers sind von zwei in Höhenrichtung beabstandeten, in eine Nut im oberen Lagerbereich des Gehäuses angeordneten Drahtringen aus gehärtetem Stahldraht gebildet. Die tischplattenseitigen Laufbahnen des Wälzlagers sind von zwei in Höhenrichtung beabstandeten Drahtringen aus gehärtetem Stahldraht gebildet, die in einer teilweise in der gehäusezugewandten Innenseite des ringförmig überragenden Randbereichs der Tischplatte und teilweise im Lagerring ausgebildeten Nut angeordnet sind.

Die Antriebswalze des Drehtisches verfährt immer im 360°-Schritt, das heißt jeweils eine Umdrehung nach vorne oder zurück. Für Drehtische mit zwei oder mehr Positionen, zum Beispiel 180°-Schritten usw., wird mit Untersetzungsgetrieben gearbeitet. Die Abfrage der verschiedenen Positionen ist sehr aufwendig und teuer, da hierzu Nocken zur Anwendung kommen und sogenannte Initiatoren und Reihengrenztaster. Dabei ist zu berücksichtigen, dass die verschiedenen Abnehmer die Abfragepositionen selbst einrichten. Die Endlagenbestimmung wird also vom Endkunden eingestellt, was sehr aufwendig und auch lastabhängig ist. Bei mechanischem Verschleiß ist außerdem eine Nachjustierung erforderlich, was abermals zeit- und arbeitsaufwendig ist.

Aus der DE 20 2005 019 464 U1 ist ein Stellorgan eines Kraftfahrzeuges vorbekannt, mit einem Motor zur Betätigung des Stellorgans, mit einem Sensorelement zur Erfassung eines den Motor charakterisierenden Parameters und mit einer mit dem Sensorelement und dem Motor verbundenen Steuereinrichtung zur Steuerung des Motors, wobei die Steuereinheit dafür eingerichtet ist, den Verlauf des den Motor charakterisierenden Parameters oder eines davon abgeleiteten Signals über den Stellweg aufzunehmen, den aufzunehmenden Verlauf mit einer stellwegsabhängigen Abschaltschwelle zu vergleichen, bei Überquerung der Abschaltschwelle den Antrieb zu stoppen und/oder zu reversieren und die Abschaltschwelle in Abhängigkeit von einer Abschaltdauer des Stellorgans zu verändern. Die Verstelleinrichtung soll zur Anstellung einer elektrisch antreibbaren Seitenscheibe als ein betätigbares Stellorgan bei einem Kraftfahrzeug Verwendung finden. Hierzu ist ein elektrischer Motor in einer Türverkleidung angeordnet, dem als Sensorelement ein Hall-Sensor zugeordnet ist, der mittels eines auf der Antriebsachse des Motors platzierten Ringmagneten die Drehzahl des Motors misst. Die Steuereinheit ist über eine Steuerleitung sowohl mit dem Motor also mit dem Sensorelement verbunden. Über die Steuerleitung werden dabei Steuersignale von der Steuereinheit zu dem Motor gesendet, als auch Informationen über die Stellung des Stellorgans sowie über die Drehzahl des Motors empfangen. Als derartige Signale fungieren beispielsweise die Spannungsimpulse des HallSensors. Zum Ansteuern des Motors sendet die Steuereinheit entsprechende Signale über die Steuerleitung. Der Motor betätigt daraufhin über ein Antriebselement das Stellorgan. Das als Seitenscheibe ausgebildete Stellorgan wird dann geschlossen oder geöffnet. Zur Ansteuerung des Stellorgans weißt die Steuer einheit eine elektronische Baugruppe auf, die einen Mikroprozessor umfasst. Weiter sind der Steuereinheit über Anschlussleitungen und Anschlüsse ein Temperatursensor sowie ein Spannungssensor zugeordnet. Zur Generierung der entsprechenden Messdaten ist dem Temperatursensor und dem Spannungssensor eine Messelektronik zugeordnet. Die Messelektronik kann über eine Steuerleitung von der Steuereinheit betätigt werden. In dem Mikroprozessor wird aus dem gewonnenen Drehzahlverlauf basierend auf Erfahrungswerten abschnittsweise jeweils ein Abschaltschwellenwert für die Seitenscheibe und ein Nachführwert für den Drehzahlverlauf erzeugt. Der Drehzahlverlauf wird mit der entsprechend errechneten Abschaltschwelle abschnittsweise verglichen. Als Abschnitt können beispielsweise eine oder mehrere Vollumdrehungen des Motors definiert sein. Fällt die Drehzahl innerhalb des beobachteten Abschnitts unter den Nachführwert, so wird für den nachfolgenden Abschnitt kein neuer Abschaltschwellenwert errechnet. Anderenfalls wird der Abschaltschwellenwert aus dem gegebenen Verlauf für den nachfolgenden Abschnitt ermittelt. Fällt die ermittelte Drehzahl unter den Abschaltschwellenwert, so wird der Motor reversierend angetrieben. Es ist ein Einklemmfall erkannt. Somit lernt die Steuerung, sich an geänderte Gegebenheiten während der Betätigung des Stellorgans im Verlauf des Stellwegs anzupassen.

Aus der DE 197 05 543 C5 ist ein Torantrieb, insbesondere für Garagentore, vorbekannt, mit einem Motor, einer Kopplungseinrichtung, die Antriebsenergie des Motors in Bewegung des Tors umsetzt und einer Steuereinheit mit einem Gehäuse, die den Motor in Abhängigkeit von an die Steuereinheit angeschlossenen Baugruppen steuert, wobei die Funktion der Baugruppen über Parameter an die Steuereinheit individuell einstellbar ist, und wobei die Steuereinheit zur Einstellung der Parameter der Baugruppen eine Bedieneinheit mit einem Display und Einstellmitteln, eine Speichereinrichtung zur Speicherung von Parametern sowie eine Prozessoreinrichtung aufweist, wobei die Bedieneinheit sowie Klemmen zum Anschluss der Baugruppen an dem Gehäuse von außen zugänglich sind, wobei die Prozessoreinheit die Speichereinrichtung und die Bedieneinheit derart ansteuert, dass die Parameter wenigstens einiger der Baugruppen im Rahmen von Menüs auf dem Display angezeigt werden und mittels der Einstellmittel einstellbar sind, wobei die Menüs nach übergeordneten Funktionsgruppen zusammengestellt sind, und wobei bestimmte Parameter und/oder Menüs nur nach Eingabe eines Codes einstellbar bzw. anwählbar sind. Durch diese Ausgestaltung soll der Wartungsaufwand bei einem Torantrieb vermindert werden. Dies soll dadurch erreicht werden, dass die Bedieneinheit sowie Klemmen zum Anschluss der Baugruppen an dem Gehäuse von außen zugänglich sind, so dass die Steuereinheit des Tor antriebes ab Werk durch das Gehäuse gekapselt geliefert werden kann. Das Anschließen der Baugruppen erfolge einfach über die entsprechenden Klemmen an dem Gehäuse. Das Einrichten des Torantriebs, also insbesondere das Einstellen der Parameter der Baugruppen erfolge ebenfalls von außen über die Bedieneinheit mittels der menügestützten Bedienführung. Als Speicher wird ein EEPROM verwendet. Auch die Servicespeicher sollen sicherheitsrelevant ausgebildet werden. Sie umfassen beispielsweise als Parameter ein Wartungsintervall sowie eine Kennung, ob bestimmte Wartungen ausgeführt worden sind. In dem Referenzfahrtmenü können Parameter festgelegt werden, die beispielsweise im Rahmen eines sogenannten "Teach in" festgelegt werden, wie die Positionen, die von dem Torantrieb als Endlage für das geschlossene bzw. das offene Tor zugrundegelegt werden sollen. Eine der Baugruppen ist ein Darstellungs- bzw. Winkelgeber, der beispielsweise mit der Antriebswelle des Motors gekoppelt ist und Winkelinkremente an die Schnittstellenplatine leitet, aus denen sich die absolute Torposition errechnen lässt. Der Drehstellungs- bzw. Winkelgeber kann beispielsweise durch einen Hall-Sensor gebildet sein. Die Prozessorplatine umfasst einen Mikroprozessor, einen ROM-Speicher, einen RAM-Speicher und einen EEPROM-Speicher. Der Mikrospeicher ist zur Einstellung der verschiedenen Parameter so programmiert, dass die Parameter sämtlicher Baugruppen im Rahmen von Menüs auf dem einzeiligen Display mittels des Verstellgliedes und des Anwahltasters angezeigt und mittels der Auswahltaste eingestellt werden können.

Die EP 1 501 185 A2 betrifft ein Verfahren zum Betrieb einer motorischen Positionierungsvorrichtung mit einem einen Rotor und einen Stator aufweisenden Elektromotor insbesondere Synchronmotor, mit mindestens einem Polpaar sowie einer Regeleinrichtung für den Elektromotor, wobei die Strangströme und/oder Strangspannungen des Elektromotors gemessen werden und zur sensorlosen Positionsbestimmung des Rotors verwendet werden, wobei unterhalb einer vorgegebenen Mindestdrehzahl ein Polsprung des Rotors durch Auswerten der gemessenen Strangströme und/oder Strangspannungen ermittelt wird, wobei ein ermittelter Polsprung durch Nachregeln des Elektromotors automatisch kompensiert wird. Vorrichtungen dieser Art sollen zum Antrieb eines Werkzeugrevolvers oder eines Rundschalttisches eingesetzt werden. Hierbei wird der untere Drehzahlbereich verhältnismäßig häufig durchfahren, insbesondere beim Beschleunigen und Abbremsen aus bzw. in einen Ruhezustand, in dem die vorgegebene Position eingehalten ist. Aufgrund der geforderten hohen Positionierungsgeschwindigkeiten kann es insbesondere beim Abbremsen des Elektromotors zum Überspringen eines Pols des Rotors gegenüber dem Stator kommen, was zu einer tatsächlichen Fehlstellung des Rotors und damit der daran angeschlossenen zu positionierenden drehbaren Einrichtung führt. Bei dem Elektromotor handelt es sich um einen Synchronmotor.

Die JP-56-081405 A zeigt und beschreibt eine Kontrolleinrichtung mit einem Fotosensor, um die Drehbewegung eines Motors mit Schneckengetriebe zu kontrollieren.

Durch die EP 1 262 845 A1 ist ein Verfahren zum gesteuerten Positionieren eines mittels eines drehzahlveränderbar angesteuerten Antriebs angetriebenen Verfahrelements an einen vorbestimmten Zielpunkt vorbekannt, bei dem eine für jeden Positioniervorgang individuell anpassbare Soll-Verfahrgeschwindigkeit vorgegeben wird und der Bremseinsatzpunkt für das Verfahrelement in Abhängigkeit von dieser individuell vorgegebenen Soll-Verfahrgeschwindigkeit festgelegt wird.

Die DE 33 14 105 A1 betrifft eine gesteuerte Kupplungs-Bremseinheit für eine Werkstückbearbeitung, mit einem Antrieb, einem angetriebenen Element, einer Kupplung zur Verbindung des Antriebs mit dem angetriebenen Element, wenn die Kupplung eingekuppelt ist, mit einer Bremse, und mit einer Vorrichtung zum Steuern der Kupplung und der Bremse, um damit die Stellung des angetriebenen Elements zu steuern, wobei die Steuerung Einrichtungen zur Anzeige eines Nullpunktes, zur Betätigung der Bremse, zum Anhalten des angetriebenen Elements, zum Lernen, in welcher Stellung das angetriebene Element im Verhältnis zum Nullpunkt angehalten wird, zum Lernen, welche Bewegung das angetriebene Element ausführen muss, um einen gewählten auf den Nullpunkt bezogenen Soll-anhaltepunkt zu erreichen, zur Selbstkorrektur eines Fehlers zwischen der Ist-Anhaltestellung des angetriebenen Elements und dem Soll-Anhaltepunkt, bis dieser innerhalb eines gewählten Genauigkeitsbereiches erreicht ist sowie zur fortgesetzten Fehlerkorrektur zwischen der Ist-Anhaltestellung des angetriebenen Elements und der Soll-Anhaltestellung beim Fortschreiten der Werkstückbearbeitung zur automatischen Kompensation von Fehlern der Anlage, wenn die Ist-Anhaltestellung von der Soll-Anhaltestellung infolge von Temperatureinflüssen oder anderer Faktoren auswandert, aufweist. Diese Vorrichtung bezieht sich auf rechnergesteuerte Kupplungs-Bremseinheiten oder Einheiten mit einer Steuerschnittfläche zwischen einem Mikroprozessor oder Mikrorechner und einer Kupplungs-Bremseinheit. Bei einer speziellen Anwendung betrifft diese Vorrichtung einen von einem Mikrorechner gesteuerten Teil- oder Indextisch, der mit einer beliebigen Anzahl von Arbeitsstationen entweder als Rund- oder Lineartisch eingesetzt werden kann. Durch die Anwendung eines Rechners mit einer Kupplungs-Bremseinheit soll ermittelt werden, welche Stellung bei einer bestimmten Anwendung eingenommen wird, welche Bewegungen durchzuführen sind, um einen Messpunkt zu erreichen, Selbstkorrekturen durchzuführen, bis der Sollmesspunkt richtig erreicht ist und, um beim Fortschreiten des Arbeitsganges weiterhin zu korrigieren, wodurch automatisch Fehler in der Anlage kompensiert werden, wenn diese aufgrund von Temperatureinflüssen oder anderen Faktoren auswandern. Diese Vorrichtung soll insbesondere bei Ölförderpumpen, bei denen die Pumpe bis zu einem gewissen Grad beschleunigt oder hochgefahren wird, eingesetzt werden, um zu ermitteln, welcher Druck herrscht, um zu berechnen, wann die Bremse betätigt werden soll, um dadurch Anhaltepunkt, die Anhaltezeit sowie Beschleunigung und Abbremsung der Pumpe zu optimieren, um einen gewünschten Pumpendurchsatz zu erhalten. Wird diese Vorrichtung bei sogenannten Teil- oder Indextischen eingesetzt, sollen Indexstifte an gewählten Stellungen über den Indextisch verteilt werden, um den Indexwinkel anzugeben, bei welchem ein Werkstück angehalten wird und bei welchem mindestens ein Arbeitsgang am Werkstück durchzuführen ist. Die Anzahl der Stationen kann durch Ziehen und Neustecken der Indexstifte in neu gewählte Bohrungen geändert werden.

Der Erfindung liegt die Aufgabe zugrunde, einen Drehtisch mit einer zugeordneten Steuerung oder Regelung gemäß der vorausgesetzten Gattung dahingehend zu verbessern, dass die Abfrage der Drehrichtung und etwaiger Schaltpunkte oder Endlagekontrollen und deren kundenspezifische Einrichtung oder Programmierung problemlos zu bewerkstelligen sind.

Des weiteren liegt der Erfindung die Aufgabe zugrunde, eine Steuerung oder Regelung für die im Gattungsbegriff des Patentanspruchs 4 beschriebenen Drehtische zu schaffen.

### Lösung der Aufgabe für einen Drehtisch

Diese Aufgabe wird durch die in Patentanspruch 1 wiedergegebenen Merkmale gelöst.

Erfinderische Ausgestaltungen sind in den Patentansprüchen 2 und 3 beschrieben.

Bei dem erfindungsgemäßen Drehtisch wertet ein induktives Meßsystem die jeweilige Position aus und übermittelt entsprechende Signale an einen integrierten Mikroprozessor. Dieser Mikroprozessor ist in eine Steuerung bzw. Regelung einbezogen, durch die der motorische Antrieb die Welle entsprechend steuert. Während der Drehbewegung der Welle wird innerhalb des sogenannten Rastwinkels last- und drehzahlabhängig der motorische Antrieb ein- bzw. abgeschaltet. Dabei wird zwischen langsamen und schnellen, getrennten Schaltpunkten unterschieden. Diese Schaltpunkte werden selbst erlernt und kontinuierlich optimiert, zum Beispiel bei Lastwechsel oder Bremsverschleiß. Das Einlernen der Schaltpunkte wird durch ein- oder mehrmaliges Ansteuern der gewünschten Schaltpunkte bzw. Positionen "eingelernt" (abgespeichert, teach-in). Sollen diese Schaltpunkte verändert werden, brauchen die neuen Schaltpunkte lediglich einmalig oder mehrere Male angesteuert zu werden, um sie in den betreffenden Mikroprozessor nach der Teach-In-Methode abzuspeichern oder "einzulemen°. Für den Fall, dass die Schaltpunkte sich innerhalb der vorgegebenen Grenzwerte verändern, zum Beispiel außerhalb der sogenannten Rastwinkel liegen, wird eine Störmeldung ausgegeben. Außerdem überwacht die Steuerung und/oder Regelung das Erreichen einer Nullposition und das Überfahren derselben. Dabei kann die erfindungsgemäße Vorrichtung sowohl für den Reversierbetrieb als auch für den Durchlaufbetrieb verwendet werden.

Ein weiterer Vorteil besteht darin, dass das Ringsensorelement auf zum Beispiel Drahtbruch und Kurzschluss die Vorrichtung überwacht wird und im Fall eines Fehlers die Ausgänge abschaltet und eine Störmeldung abgibt.

Besonders vorteilhaft ist, dass der Mikroprozessor relevante Diagnosedaten wie Anzahl Zyklen, Taktzeiten, Drehunterbrechungen, Überläufe usw. überwacht und abspeichert. Diese Daten sind über eine serielle Schnittstelle abrufbar.

Der als Ringinitiator ausgebildete Ringsensor kann dabei für alle Wellen passend ausgeführt werden und einer Blackbox funktional zugeordnet sein, die in einen Schaltschrank und damit in eine Steuerung oder Regelung einbezogen ist und kundenspezifische Applikationen aufweist. Diese Blackbox erhält Eingangssignale von dem induktiven Sensor oder den induktiven Sensoren als Analogwert oder als serielles Signal und erfasst zum Beispiel die Drehrichtung, die Null-Lage und die Drehgeschwindigkeit sowie etwaige Toleranzwerte. Außerdem wird dadurch eine Optimierung des Bremspunktes ermöglicht, so dass zum Beispiel die Welle an der exakten Endlage zum Stehen kommt. Auch Notstopps, Umschaltvorgänge auf Schnell- auf Langsamfahrt usw. können dadurch erfasst werden, so dass zum Beispiel Überiastvorgänge abspeicherbar und jederzeit abrufbar sind.

### Lösung der Aufgabe betreffend Steuerung oder Regelung für einen Drehtisch

Die Aufgabenstellung hinsichtlich der Steuerung oder Regelung wird durch die Merkmale des Patentanspruchs 4 gelöst.

Erfinderische Ausgestaltungen sind in den Patentansprüchen 5 bis 14 beschrieben.

Drehtische der erfindungsgemäßen Art werden in der Regel mit einpoligen oder polumschaltbaren Drehstromasynchronmotoren und der Kontrolle der Nullstellung angetrieben. Die Positionserfassung des Drehtisches zur selektiven Werkzeugfreigabe erfolgt dabei nicht über die Steuerung, sondern wird separat über Annäherungsschalter direkt an der Drehtischplatte abgefragt. Durch ein Betätigungselement auf der Antriebswalze wird die Position der Walze mit einem induktiven Ringsensor über die vollen 360 Grad erfasst. Die Nullstellung der Drehwalze (Rastwinkel) ist für jede Teilung physikalisch immer an der gleichen Stelle. Ist die Walze in der Nullstellung, wird der Ausgang "in Position" eingeschaltet. Die Null-stellung ist gegeben, wenn die Walze innerhalb des Rastwinkels von zum Beispiel 30 Grad steht. Dies bedeutet, dass die ideale Nullstellung in der Mitte des Rastwinkels, also bei zum Beispiel 15° liegt. In dieser idealen Nullstellung soll der Drehtisch zum Stehen kommen. Die Nullstellung wird durch eine LED angezeigt. Bei einer Abweichung von mehr als fünf Grad wird der Abschaltpunkt selbsttätig durch Steuerung bzw. Regelung korrigiert, um die ideale Nullstellung bei der nächsten Drehung wieder zu erreichen. Würde der korrigierte Schaltpunkt außerhalb des Rastwinkels liegen, zum Beispiel durch Bremsverschleiß würde dies zu Schäden am Drehtisch führen. Dies muss verhindert werden, zusätzlich wird dies durch eine LED angezeigt (Ende des Rastwinkels). Wird die Nullstellung überfahren, die Walze kommt also außerhalb des Rastwinkels zum Stehen, wird der Ausgang "Überlauf vom" bzw. "Überlauf zurück", eingeschaltet. Der Überlauf kann durch jeweils eine LED angezeigt werden.

### Funktionsbetrieb der Drehtischsteuerung .

Die Drehtischsteuerung erhält von der übergeordneten Steuerung oder Regelung ein richtungsabhängiges Startsignal, wenn der Drehtisch drehen soll "Vorwärts Ein" bzw. "Rückwärts Ein", und zusätzlich ein Signal, wenn der Drehtisch mit der niedrigen Drehzahl drehen soll "Langsam ein". Daraufhin überprüft die Drehtischsteuerung oder Regelung für die jeweilige Richtung die Fahrfreigaben (kein Überlauf, Position vom/zurück noch nicht erreicht). Ist die Fahrfreigabe in Ordnung, wird der Ausgang "Vorwärts Start" bzw. "Rückwärts Start" eingeschaltet und die Leistungsschütze des Drehtischmotors für die freigegebene Richtung eingeschaltet. Erst jetzt beginnt der Drehtisch sich zu drehen. Wird der Rastwinkel verlassen, wird der Ausgang "in Position" ausgeschaltet. Die Abschaltung der Drehtischbewegung erfolgt mit dem Erreichen des vorher berechneten Schaltpunktes, der Ausgang "Vorwärts Start" bzw. "Rückwärts Start" wird ausgeschaltet. Ist der Ausgang "Vorwärts Start" bzw. "Rückwärts Start" ausgeschaltet, die Drehtischbewegung also Null und die Walze im Rastwinkel, wird von der Drehtischsteuerung der Ausgang "in Position" eingeschaltet. Wird der Rastwinkel überfahren, wird der Ausgang "Überlauf vorn" bzw. "Überlauf zurück" eingeschaltet. Die übergeordnete Steuerung oder Regelung setzt mit dem Signal "in Position" bzw. "Überlauf vom", "Überlauf zurück" und das Startsignal "Vorwärts Ein" bzw. "Rückwärts Ein", zurück. Dies wird von der Drehtischsteuerung kontrolliert. Bei emeutern Setzen des Startsignals kann eine neue Bewegung ausgelöst werden.

Das Startsignal "Vorwärts Ein" bzw. "Rückwärts Ein" muss während der gesamten Drehtischbewegung eingeschaltet sein. Wird das Startsignal unterbrochen, muss sofort der Ausgang "Vorwärts Start" bzw. "Rückwärts Start" ausgeschaltet werden. Bei der Erstinbetriebnahme oder nach Gerätetausch erfolgt mit dem Defaultwert von zehn Grad für "schnell" und fünf Grad für "langsam" vor der idealen Null-Stellung die Abschaltung. Danach wird durch die Differenz zwischen der idealen Null-stellung der für jeden Drehtisch spezifische Abschaltpunkt ermittelt und gespeichert. Da der Abschaltpunkt auch durch äußere Einflüsse, zum Beispiel Last, beeinflusst wird, kann es beim erstmaligen Einschalten nach Laständerungen zum Überfahren der Null-Stellung kommen. Dies ist zum Beispiel der Fall, wenn der Drehtisch bei der Erstinbetriebnahme in der Herstellerfirma ohne Kundenlast betrieben wird und später beim Kunden mit der endgültigen Last.

### Störungserfassung und Diagnose

Die Drehtischsteuerung gemäß der Erfindung testet kontinuierlich das eigene System, um Fehlfunktionen auszuschließen. Insbesondere ist der Ringsensor auf korrekte Funktion zu überprüfen, die Lage des Betätigungselements innerhalb des Arbeitsbereiches des Ringsensors und die Funktion des Mikroprozessors. Im Fehlerfall sind die beiden Ausgänge "Vorwärts Start" und "Rückwärts Start" sofort auszuschalten und der Ausgang "Störung" einzuschalten. Mit der Erkennung von "Überlauf vom/zurück" und "Ende Rastwinkel" wird ebenfalls der Ausgang "Störung" eingeschaltet.

Die Drehtischsteuerung muss folgende Daten dauerhaft speichern, um diese bei Bedarf über eine serielle Schnittstelle abrufen zu können: Zähler Zyklen, Schrittzeit, Zähler "Überlauf vom", "Überlauf zurück", "Zähler Ende Rastwinkel", "Zähler Unterbrechungen Startsignal", die 50 letzten Abschaltpunkte "schnell" und "langsam", die 50 letzten tatsächlichen Positionswerte bei Drehzahl = Null.

### Elektrische Ausführung

Die Drehtischsteuerung soll über eine 19-polige Steckvorrichtung M23 angeschlossen werden. Über die Steckvorrichtung erfolgen die Spannungsversorgung und der Signalaustausch mit der übergeordneten Steuerung oder Regelung. Im verschraubten Zustand muss die gesamte Steuerung Schutzgrad IP65 erfüllen.

Die gesamte Steuerung wird für zum Beispiel 10 Millionen Zyklen ausgelegt. Die Versorgungsspannung ist 24VDC +/- der üblichen Toleranz. Alle Ein- und Ausgänge sind PNP schaltend. Als Schaltpegel werden 24VDC +/- üblicher Toleranz benutzt. Das Bezugspotential ist der OV-Anschluss. Die Ausgänge "Vorwärts Start" und "Rückwärts Start" sind entweder kurzschlussfest ausgelegt oder gegen Kurzschluss zu überwachen. Sie sind für einen Dauerstrom von 0,5A bei 24VDC mit induktiver Belastung und für 10 Millionen Zyklen ausgelegt. Werden die Ausgänge gegen Kurzschluss überwacht, wird dies im Fehlerfall zum Beispiel mit einer LED angezeigt und der Ausgang "Störung" eingeschaltet. Die Ausgänge "in Position", "Überlauf vom", "Überlauf zurück" und "Störung" sind für einen Dauerstrom von zum Beispiel 250mA bei 24VDC ausgelegt. Die serielle Schnittstelle befindet sich zum Beispiel hinter einer verschraubten Abdeckung.

### Mechanische Ausführung

Der Ringsensor und die Steuerung bzw. Regelung sind in einem Gehäuse unter gebracht. Das Gehäuse wird für den Einsatz in einer mit Ölen, Fetten, Schmutz-und Schweißrückständen belasteten Umgebung ausgelegt und zum Beispiel die gültigen Vorschriften für den Einsatz in der Automobilbranche erfüllen. Die gesamte Steuerung oder Regelung muss resistent gegen Vibrationen und Schwingungen sein und entsprechend ausgelegt sein und wird deshalb eventuell mit Giesharz vergossen.

### Werkzeug Positionsabfrage an der Drehtischplatte

Die Positionsabfrage an der Drehtischplatte soll in zwei verschiedenen Arten dem Kunden als Option angeboten werden und zwar "Standard" oder "Sicherheit°. Diese Abfragen werden durch die "übergeordnete" Steuerung oder Regelung und entsprechenden Auswertegeräten direkt abgefragt und kontrolliert. Die Positionsabfrage hat keinerlei Verbindung zum Drehtischsteuergerät und ist eine eigenständige Option, die dem Kunden eine serienmäßig ausgereifte und kostengünstige Lösung zur Stellungsabfrage bieten soll. Bei der Auswahl der Sensoren können handelsübliche Standardprodukte verwendet werden. In der Ausführung "Standard" erfolgt die Abfrage mittels üblichen Annäherungsschaltem. Eingesetzt werden hierfür Doppel- und Mehrfachsensoren mit M12 Steckanschluss, die dann entsprechend den Drehtischteilen angebaut werden. In der Ausführung "Sicher heit" erfolgt die Abfrage mittels Sicherheitssensoren der Kategorie 4. Auch diese sollten über einen M12 Steckanschluss verfügen und werden entsprechend der Drehtischteilung angebaut. Die Sicherheitssensoren sollten ohne speziell kodiertes Betätigungselement arbeiten, um die Kosten und die Montage zu erleichtern. Die Abfragen sollten räumlich so voneinander angebracht werden, dass eine Verwechslung der Anschlussstecker ausgeschlossen ist.

Weitere Merkmale und Vorteile ergeben sich aus der nachfolgenden Beschreibung der Zeichnung, in der die Erfindung - teils schematisch - beispielsweise veranschaulicht ist. Es zeigen:
- Fig. 1: einen Drehtisch in perspektivischer Darstellung, teils geschnitten darge- stellt, mit einem motorischen Antrieb;
- Fig. 2: eine perspektivische Ansicht auf die Drehwalze mit einem induktiven Meß- system;
- Fig. 3: eine schematische Darstellung einer Drehtischschaltung und .

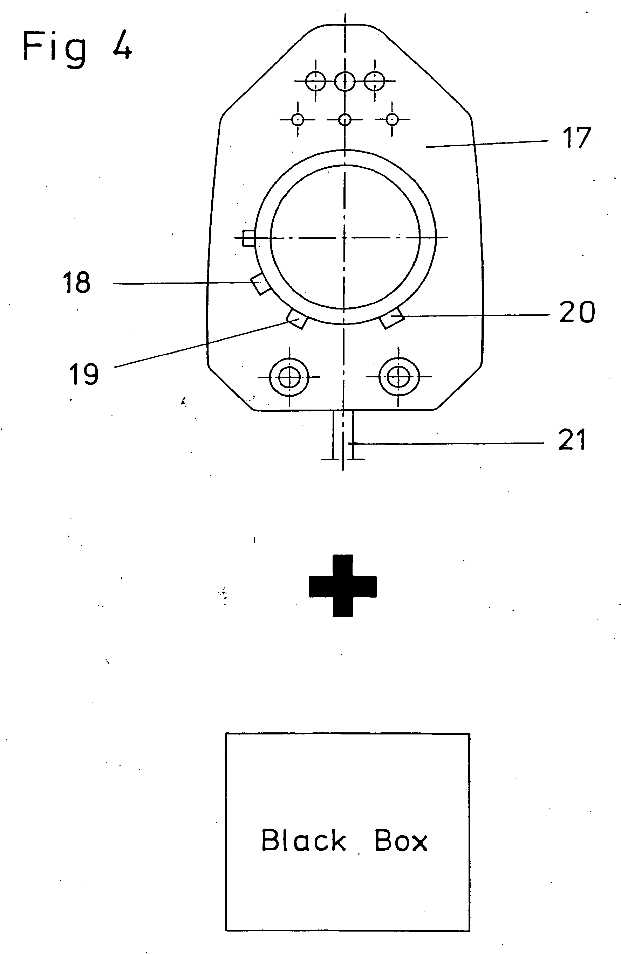

- Fig. 4: ein induktives Ringsensorelement mit mehreren als Mikroschalter ausgebildeten Stellungsgebern bzw. Sensoren.

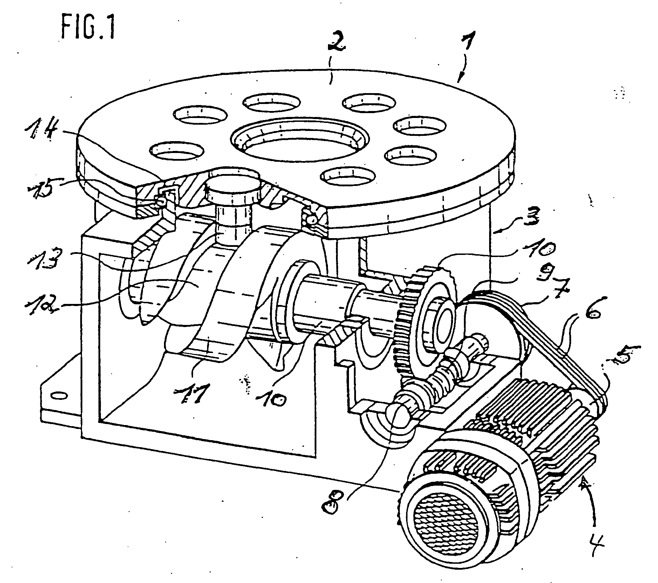

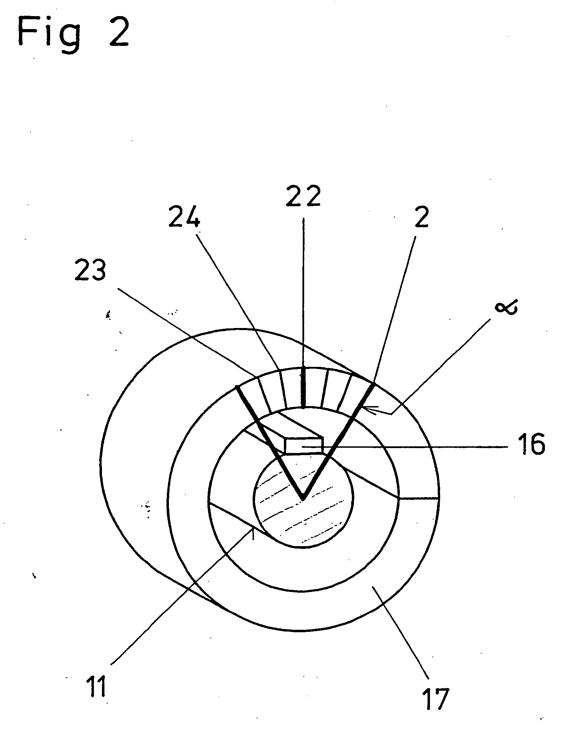

Mit dem Bezugszeichen 1 ist in Fig. 1 insgesamt ein Drehtisch bezeichnet, der an seiner Oberseite eine kreisförmig begrenzte Tischplatte 2 aufweist, die oberhalb eines Gehäuses 3 drehbar und durch einen außen am Gehäuse 3 angeordneten elektrischen Antrieb 4 antreibbar ist. Hierzu sind auf der Welle des elektrischen Antriebs 4 Keilriemenscheiben 5 angeordnet, welche über Keilriemen 6 Keilriemenscheiben 7 antreiben. Die Keilriemenscheiben 7 sind auf dem einen aus dem Gehäuse 3 herausgeführten Ende einer im Gehäuse drehbar gelagerten Welle 8 drehfest angeordnet. Die Welle 8 trägt eine Schnecke 9 eines als Vorgelege dienenden Schneckengetriebes, dessen mit der Schnecke 9 kämmendes Schneckenrad am Ende einer im Gehäuse 3 gelagerten horizontalen Antriebswalze 10 angeordnet ist, die ihrerseits eine Antriebswalze 11 trägt, in deren grundsätzlich zylindrischer Umfangsfläche eine Antriebsnut 12 eingearbeitet ist, welche - bei eingeschaltetem Antrieb 4 - aufeinanderfolgend jeweils ein von der Tischplatte 2 nach unten ins Gehäuse 3 vorstehender Rollenbolzen 13 von einer Schar von in gleichmäßigen Winkelabständen auf einem gemeinsamen Durchmesser angeordneten Rollenbolzen 13 eingreift. Die Länge der Antriebsnut 12 in der Antriebswalze 11 ist so bemessen, dass bei laufendem Antrieb 4 ein in die Antriebsnut 12 eingeführter und dann bei der weiteren Drehung der Antriebswalze 12 mitgenommener Rollenbolzen 13 gerade an einer Stirnseite der Antriebswalze 11 aus der Antriebsnut 12 austritt, wenn der nächstfolgende Rollenbolzen 13 auf der gegenüberliegenden Seite in die Antriebsnut 12 eintritt. Die Bewegungscharakteristik, also Beschleunigen, Abbremsen und sonstige Drehbewegungen der Tischplatte 2 während des Durchtritts eines Rollenbolzens 13 durch die Antriebsnut 12 hängt vom Verlauf, also von der Steigung der Antriebsnut 12, ab. Dabei können Stillstandsperioden - beim Eingreifen des Rollenbolzens 13 in einen in Umfangsrichtung verlaufenden Nutabschnitt -, Beschleunigungs- und Verzögerungsperioden und Perioden konstanter Geschwindigkeit - beim Eingreifen des betreffenden Rollenbolzens 13 in einen Nutabschnitt mit konstanter Steigung - aufeinanderfolgen. Bei dem aus der Fig. 2 ersichtlichen Drehtisch weist die Tischplatte 2 acht Rollenbolzen 13 auf, so dass die Tischplatte 2 bei einer vollen Umdrehung beispielsweise insgesamt achtmal von Null auf eine konstante Geschwindigkeit beschleunigt und dann wieder auf Null verzögert, das heißt zum Stillstand, abgebremst wird, wobei die Stillstandsphase, in welcher beispielsweise die Bearbeitung von Werkstücken in verschiedenen um den Drehtisch 2 herum angeordneten Bearbeitungsstationen erfolgt, oder auch Werkstücke in Aufnahmen in einer auf der Tischplatte 2 befestigten Werkzeugplatte übernommen bzw. aus ihnen herausgetragen werden, durch Abschalten des Antriebsmotors 4 verlängert werden kann. Die Tischplatte 2 dreht sich also schrittweise insgesamt bei diesem Beispiel achtmal und fährt dabei in den Stillstandsperioden exakt die zugeordnete Bearbeitungs- oder Werkstückaufnahme bzw. Austragsposition an.

Selbstverständlich kann die Anzahl der Rollenbolzen 13 größer oder kleiner als vorbeschrieben sein, so dass die Tischplatte 2 also für eine volle Umdrehung zum Beispiel sechs Schritte oder weniger Schritte durchführt.

Das Gehäuse 3 weist in seinem oberen, die Tischplatte 2 lagernden Bereich einen in der Draufsicht kreisförmig begrenzten, nach oben vorstehenden Lagerabschnitt 14 auf, in dessen äußerer Umfangsfläche eine Nut eingearbeitet ist, welche einen gehäuseseitig als Laufbahnen für Lagerkugeln 15 dienenden gehärteten Drahtring aus Stahldraht aufnimmt.

Die Erfindung ist nicht auf Drehtische beschränkt. Statt einer Bauart mit Schneckenradgetriebe können auch Drehtische mit Stirnradgetrieben oder Globoid-Präzisions-Schrittgetriebe, aber auch Hubtische, bei welchen die Drehwalze vertikal angeordnet ist und die zum ruck- und stoßfreien Verfahren und Positionieren einer Nutzlast ausgelegt sind, zur Anwendung bei der Verwirklichung des Erfindungsgedankens zur Anwendung gelangen. Die Erfindung ist nicht auf Drehtische beschränkt. Derartige Hubtische werden zum Beispiel als sogenannte Hub-Shuttle-Systeme eingesetzt, um mehrere Bauteile, zum Beispiel Karosserien im Kfz-Bau, synchron, ruck- und stoßfrei von einer Station zur nächsten zu transportieren. Dabei werden die Bauteile synchron angehoben und nach einem Horizontalhub positionsgenau in der nächsten Station wieder abgelegt. Der Horizontal-Hub kann hierbei über einen Kulissenantrieb und der Vertikal-Hub durch einen Längsantrieb über eine Drehwelle erfolgen, die ebenfalls entsprechend der Bewegungscharakteristik eine Nut aufweist, in die Rollenbolzen 13 eintauchen. Ebenso wie bei dem Antrieb von drehbewegten Massen, zum Beispiel bei Drehtischen, kommt es hierbei auf eine hohe Wiederholgenauigkeit bei gleichzeitiger exakter Positionierung in den Endlagen an.

Wie aus Fig. 2 zu erkennen ist, ist bei dieser Ausführungsform der Antriebswalze 11 ein Betätigungselement 16 in Form eines Nockens zugeordnet, der sich mit der Antriebswalze 11 dreht. Die Antriebswalze 11 wird im Bereich des Betätigungselementes 16 von einem induktiven Ringsensor oder Ringsensorelement 17 umschlossen, dem mehr als einer, zum Beispiel drei, Sensoren 18, 19, 20 zugeordnet sind, die von dem Betätigungselement 16 bedämpft werden. Die dadurch ausgelösten Signale werden zum Beispiel über eine Leitung 21 an eine Steuer- oder Regelvorrichtung weitergeleitet, in die der motorische Antrieb 4 einbezogen ist. Der Steuer- oder Regeleinrichtung ist ein nicht dargestellter Mikroprozessor zugeordnet, in dem die Signale verarbeitet und/oder abgespeichert werden. Man erkennt zum Beispiel aus Fig. 2 den mit a bezeichneten sogenannten Rastwinkel und die mit 22 bezeichnete Null-Position als Ideal-Position. Weiterhin sind Schaltpunkte mit Schnell- aus" und "Langsam aus" für die eine Bewegungsrichtung dargestellt und mit den Bezugszeichen 23 und 24 bezeichnet.

Das so geschaffene induktive Meßsystem wertet die Positionen aus und übergibt diese aus dem integrierten Mikroprozessor an die Steuer- oder Regelvorrichtung. Der Prozessor steuert zum Beispiel den motorischen Antrieb 4 des Drehtisches 2 oder Hubvorrichtung und erzeugt Positionsmeldungen. Während der Drehung, zum Beispiel des Drehtisches 2, wird innerhalb des Rastwinkels α fast- und drehzahlabhängig der elektrische Motor 4 ab- oder wieder eingeschaltet. Für schnelle und "Langsam" sind die getrennten Schaltpunkte wie aus Fig. 2 ersichtlich ist, vorhanden. Die Schaltpunkte werden selbst erlernt und kontinuierlich optimiert, zum Beispiel bei Lastwechsel oder Bremsverschleiß. Sie können durch ein- oder mehrmaliges Ansteuern "eingelernt" (sogenannte Teach-In-Methode) werden. Sollte der erforderliche Schaltpunkt außerhalb des Rastwinkels α liegen, wird eine Störmeldung ausgegeben. Die Steuerung oder Regelung überwacht somit das Erreichen der Nullposition 22 und das Überfahren derselben. Die Steuerung oder Regelung ist sowohl für den Reversierbetrieb als auch Durchlaufbetrieb einsetzbar. Der Ringsensor wird auf Drahtbruch oder Kurzschluss überwacht. Im Fehlerfalle werden die Ausgänge abgeschaltet und Störmeldungen ausgegeben. Der Mikroprozessor speichert relevante Diagnosedaten wie Anzahl der Zyklen, Taktzeiten, Drehunterbrechungen, Überläufe. Die Daten sind über eine serielle Schnittstelle abrufbar (nicht dargestellt).

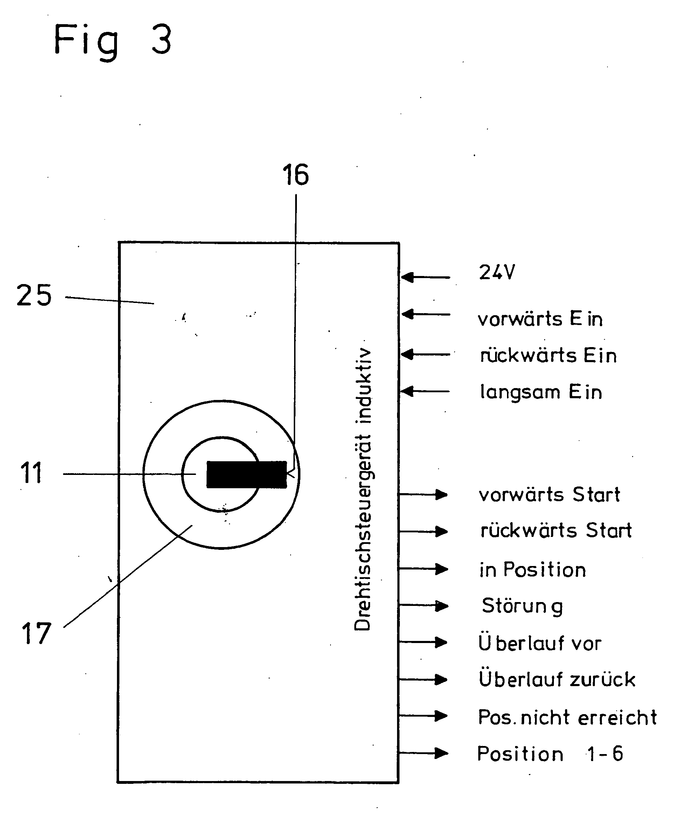

Fig. 3 zeigt nochmals ein schematisch angedeutetes Drehtisch-Steuer- oder Regelgerät 25. Mithin wird während der Drehung ab einem lastspezifischen Winkel vor der Nullposition der Motor 4 abgeschaltet. Besonders vorteilhaft ist es, dass bei wechselnden Betriebsbedingungen, auch bei wechselnden zu bewegenden Massen, durch ein oder mehrmaliges Ansteuern der Schaltpunkte die Vorrichtung und das induktive Meßsystem "selbstlernend" sind und sich die Positionen jeweils "merken". Treten veränderte Betriebsbedingungen auf, können diese Schalt- und Messpunkte beliebig verändert werden, so dass ein derartiges induktives Meßsystem praktisch für alle Drehtische mit Zweier- oder Sechser-Teilung eingesetzt werden können, wodurch es zu einer Minimierung von Kaufteilen kommt. In die Steuer- oder Regelungsanlage kann eine SPS integriert sein. Wichtig ist auch, dass falsche Drehtischsteuerungen durch den Anwender verhindert werden, da die Steuerung bzw. Regelung den Antrieb 4 direkt abschaltet. Die Steuerung bzw. Regelung optimiert selbständig und kontinuierlich den Abschaltpunkt des Drehtisches, auch bei weichseinden Lasten.

Im übrigen ist eine einfache Montage und dadurch sehr geringe Montagekosten im Vergleich zum Stand der Technik gegeben.

Durch die Verlagerung von Drehtischfunktionen von der SPS in das Steuergerät ergibt sich eine Reduzierung des Programmieraufwandes in der SPS, die sonst übliche Anlaufüberbrückung im Durchlaufbetrieb enthält.

Die Steuerung ist praktisch wartungs- und verschleißfrei, wodurch sich die Verfügbarkeit der gesamten Anlage erhöht.

Der Drehtischtyp, zum Beispiel, Zweier-, Dreier-, Vierer-, Fünfer- oder Sechser-Teilung kann über die Programmschnittstelle eingestellt werden. Über die Programmschnittstelle können statistische Daten ausgelesen werden und ermöglichen so eine Auswertung der Betriebsparameter, zum Beispiel Betriebsstunden, Anzahl der Zyklen, Taktzeiten, Unterbrechungen, Anzahl der Überläufe oder falsche Bedienungen, zum Beispiel durch zu schnelles Bewegen von Massen.

Durch die Stellungsabfrage an der Drehtischplatte kann dem Kunden eine Werkzeugabfrage der Kategorie 4 zur Freigabe der einzelnen Werkzeuge angeboten werden, was zu einer weiteren Optimierung beiträgt.

Diese Abfragen können vom Kunden direkt auf Sicherheitsrelais oder SPS-Sicherheitseingänge verdrahtet und ausgewertet werden.

Alles in allem lässt sich die Erfindung auch für zum Beispiel Säulenheber einsetzen, bei welchen ebenfalls Antriebswalzen mit Antriebsnuten und Rastbolzen zur Anwendung gelangen.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

### Bezugszeichenliste

- 1: Drehtisch
- 2: Tischplatte
- 3: Gehäuse
- 4: Antrieb, elektrischer
- 5: Keilriemenscheibe
- 6: Keilriemen
- 7: Keilriemenscheibe
- 8: Welle
- 9: Schnecke
- 10: Antriebswalze
- 11: "
- 12: Antriebsnut
- 13: Rollenbolzen
- 14: Lagerabschnitt
- 15: Lagerkugeln
- 16: Betätigungselement
- 17: Ringsensorelement, Ringsensor
- 18: Sensor
- 19: "
- 20: "
- 21: Leitung
- 22: Null-Position
- 23: Schnell-Aus
- 24: Langsam-Aus
- 25: Drehtischsteuer- oder Regelgerät

- α: Rastwinkel

### Literaturverzeichnis

| | |
|---|---|
| DE | 33 14 105 A1 |
| DE | 19632910C1 |
| DE | 197 05 543 C5 |
| DE | 20 2005 019 464 U1 |
| EP | 0 643 636 B1 |
| EP | 1 262 845 A1 |
| EP | 1 501 185 A2 |
| JP | 56-081405 A |

## Patentansprüche

1. Drehtisch mit einer zugeordneten Steuerung oder Regelung, mit einer Antriebswalze (10, 11), die über einen motorischen Antrieb (4) drehangetrieben ist, wobei die Antriebswalze (10, 11) eine Antriebsnut (12) aufweist, in die Rastbolzen oder Rollenbolzen (13) eingreifen, wobei die Bewegungscharakteristik wie Beschleunigung, Abbremsen und sonstige Drehbewegungen einer Tischplatte (2) von der Ausbildung der Antriebsnut (12) abhängt, und die Tischplatte (2) zur Aufnahme von zu bearbeitenden Werkstücken dient, die die Tischplatte (2) schrittweise in Bearbeitungs- oder Werkstückaufnahme bzw. Austragungsposition gesteuert bewegt, **dadurch gekennzeichnet, dass** der Antriebswalze (10, 11) ein Betätigungselement (16) zugeordnet ist, das sich mit der Antriebswalze (10, 11) dreht und ein als Halter ausgebildetes induktives Ringsensorelement (17) mit mehreren Sensoren (18, 19, 20) bedämpft, wobei das Betätigungselement (16) und das Ringsensorelement (17) eine induktive Messvorrichtung (16, 17) bilden, wobei das Ringsensorelement (17) die Antriebswalze (10, 11) und das Betätigungselement (16) mit Spaltabstand umschließt und die Position der Antriebswalze (10, 11) durch induktive Messung über 360° erfasst, und die ermittelten Signale an einen Mikroprozessor oder an mehrere Mikroprozessoren weitergibt, der bzw. die in die Steuerung oder Regelung einbezogen ist bzw. sind, wobei der betreffende Mikroprozessor die Daten verarbeitet und/oder abspeichert und auswertet und an die Steuerung oder Regelung weiterleitet, die das Überfahren einer Nullposition (22) überwacht, wobei während der Drehung innerhalb eines Rastwinkels (α) last- und drehzahlabhängig ein elektrischer Motor (4) abgeschaltet und wieder eingeschaltet wird, derart, dass für Drehbewegungen "schnell" und "langsam" getrennte Schaltpunkte vorhanden sind, mit einer Blackbox, die dem Ringsensorelement (17) funktional zugeordnet ist, die in die Steuerung oder Regelung des Drehtisches einbezogen ist und kundenspezifische Applikationen aufweist, wobei die Blackbox Eingangssignale von der induktiven Messvorrichtung als Analogwert oder serielles Signal erhält und **dadurch** Drehrichtung, Nullposition (22) und die Drehgeschwindigkeit sowie etwaige Toleranzwerte erfasst, und dass in der Blackbox auf den jeweiligen Kundenwunsch abstimmbare Softwareparämeter programmierbar und abspeicherbar sind.

2. Drehtisch mit einer zugeordneten Steuerung oder Regelung nach Anspruch 1, **dadurch gekennzeichnet, dass** der Mikroprozessor mit der Blackbox und/oder Teilen der induktiven Messvorrichtung (16, 17) eine bauliche Einheit bildet.

3. Drehtisch mit einer zugeordneten Steuerung oder Regelung nach Anspruch 1 oder 2, **dadurch gekennzeichnet, dass** dies induktive Messvorrichtung (16, 17) oder Teile davon mit dem Mikroprozessor und/oder der Blackbox an Elementen des Drehtisches (1) oder einer Hubvorrichtung angeordnet ist und die Signale durch Fernübertragung über elektrische Leitungen oder durch Telekommunikation an eine Steuer oder Regeleinrichtung weiterleitbar sind.

4. Drehtisch mit einer zugeordneten Steuerung oder Regelung gemäß Patentanspruch 1 oder einem der folgenden Ansprüche, **dadurch gekennzeichnet, dass** die Nullpunktstellung gegeben ist, wenn die Antriebswalze (10, 11) innerhalb eines vorgegebenen Rastwinkels steht, der bevorzugt in der Mitte des Rastwinkels (α) liegt, wobei eine Abweichung von mehr als fünf Grad von der Nullpunkteinstellung durch die Steuerung oder Regelung selbsttätig korrigiert wird, um die ideale Nullpunkteinstellung in der Mitte des Rastwinkels bei der nächsten Drehung der Antriebswalze (10, 11) wieder zu erreichen.

5. Drehtisch mit einer zugeordneten Steuerung oder Regelung nach Anspruch 4, **dadurch gekennzeichnet, dass** die Drehtischsteuerung von einer übergeordneten Steuerung oder Regelung ein richtungsabhängiges Startsignal erhält, wenn der Drehtisch (1) drehen soll wie "Vorwärts Ein" bzw. "Rückwärts Ein", und zusätzlich ein Signal, wenn der Drehtisch (1) mit der niedrigen Drehzahl drehen soll wie "Langsam Ein", woraufhin die Drehtischsteuerung oder die Regelung für die jeweilige Richtung die Fahrfreigaben wie kein Überlauf, Position vor/zurück noch nicht erreicht, überprüft, wobei nach Fahrfreigabe der Drehtisch (1) drehangetrieben wird und beim Verlassen des Rastwinkels der Ausgang "In Position" ausgeschaltet wird.

6. Drehtisch mit einer zugeordneten Steuerung oder Regelung nach Anspruch 5, **dadurch gekennzeichnet, dass** die Abschaltung der Drehtischbewegung mit dem Erreichen des vorher berechneten Schaltpunktes, der Ausgang "Vorwärts Start" bzw. "Rückwärts Start" ausgeschaltet wird, wobei bei Drehtischbewegung Null und wenn sich die Antriebswalze (10, 11) im Rastwinkel befindet von der Drehtischsteuerung der Ausgang "In Position" eingeschaltet wird und beim Überfahren des Rastwinkels der Ausgang "Überlauf Vom" bzw. "Überlauf Zurück" eingeschaltet wird.

7. Drehtisch mit einer zugeordneten Steuerung oder Regelung nach Anspruch 5 oder 6, **dadurch gekennzeichnet, dass** das Startsignal "Vorwärts Ein" bzw. "Rückwärts Ein" während der gesamten Drehtischbewegung eingeschaltet ist.

8. Drehtisch mit einer zugeordneten Steuerung oder Regelung nach Anspruch 4 oder einem der Ansprüche 5 bis 7, **dadurch gekennzeichnet, dass** bei der ersten Inbetriebnahme oder nach Gerätetausch mit dem Defaultwert von zehn Grad für "Schnell" und fünf Grad für "Langsam" vor der idealen Nullpunkteinstellung die Abschaltung erfolgt und durch die Differenz zwischen der idealen Nullpunkteinstellung der für jeden Drehtisch (1) spezifische Abschaltpunkt ermittelt und abgespeichert wird.

9. Drehtisch mit einer zugeordneten Steuerung oder Regelung nach Anspruch 4 oder einem der Ansprüche 5 bis 8, **dadurch gekennzeichnet, dass** die Drehgeschwindigkeit der Antriebswalze (10, 11) erfasst und abgespeichert wird.

10. Drehtisch mit einer zugeordneten Steuerung oder Regelung nach Anspruch 4 oder einem der Ansprüche 5 bis 8, **dadurch gekennzeichnet, dass** das induktive Messsystem (16, 17) automatisch die Bremsposition mit automatischer Verschleißnachregelung und automatischer Lastabhängigkeitsregelung in einer Steuer oder Regelungsvorrichtung erfasst.

11. Drehtisch mit einer zugeordneten Steuerung oder Regelung nach Anspruch 4 oder einem der Ansprüche 5 bist 10, **dadurch gekennzeichnet, dass** der Mikroprozessor die statistische Überwachung des Drehtisches (1) hinsichtlich Zykluszeiten erfasst und in einem Mikroprozessor abspeichert.

12. Drehtisch mit einer zugeordneten Steuerung oder Regelung nach Anspruch 4 oder einem der Ansprüche 5 bis 11, **dadurch gekennzeichnet, dass** die Drehgeschwindigkeit der Antriebswalze (10, 11) in dem Mikroprozessor abgespeichert wird.

13. Drehtisch mit einer zugeordneten Steuerung oder Regelung nach Anspruch 4 oder einem der Ansprüche 5 bis 12, **dadurch gekennzeichnet, dass** die Anzahl der Notstopps und die Anzahl der Zuschaltvorgänge von Schnell- auf Langsamfahrt und umgekehrt, abgerufen und gespeichert werden.

14. Drehtisch mit einer zugeordneten Steuerung oder Regelung nach Anspruch 4 oder einem der Ansprüche 5 bis 12, **dadurch gekennzeichnet, dass** das induktive Messsystem (16, 17) mit dem Mikrospeicher stetig die Drehbewegungen der Antriebswalze (10, 11) erfasst und das die Einstellung von Grenzwerten vor und nach der idealen Nullposition ermöglicht.

## Claims

1. Turntable having an associated control or regulating means, having a drive roller (10, 11) turned by a motor drive (4), where the drive roller (10, 11) incorporates a driving slot (12) in which the lock pins or roller pins (13) engage, where the movement parameters such as acceleration, braking and other turning movements of a table plate (2) depend on the construction of the driving slot (12) and the table plate (2) serves to hold the workpieces to be machined, and which moves the table plate (2) under control stepwise into the machining or workpiece holder or removal position, **characterised in that** the drive roller (10, 11) is assigned an actuating element (16) which turns with the drive roller (10, 11) and damps an inductive ring sensor element (17) designed as a holder and having a number of sensors (18, 19, 20), where the actuating element (16) and the ring sensor element (17) form an inductive measuring means (16, 17), where the ring sensor element (17) encloses the drive roller (10, 11) and the actuating element (16) with an intervening gap and records the position of the drive roller (10, 11) through 360° by means of inductive measurement, and transmits the signals recorded to a microprocessor or a number of microprocessors which is or are incorporated into the control or regulating means, where the microprocessor concerned processes and/or stores and evaluates the data and transmits them to the control or regulating means, which monitors the overrunning of a zero position (22), where during turning within a rest angle (α) an electric motor (4) is switched off and switched on again according to load and speed in such a way that there are separate switching points provided for "fast" and "slow" turning movements, having a black box which is functionally assigned to the ring sensor element (17) and which is incorporated into the control or regulating means and incorporates customer-specific applications, where the black box receives input signals from the inductive measuring means as an analog value or serial signal and thereby records direction of rotation, zero position (22) and turning speed and any tolerance values, and that software parameters that can be set according to customer requirement can be programmed and stored in the black box.

2. Turntable having an associated control or regulating means in accordance with claim 1, **characterised in that** the microprocessor forms a structural unit with the black box and/or parts of the inductive measuring means (16, 17).

3. Turntable having an associated control or regulating means in accordance with claim 1 or 2, **characterised in that** the inductive measuring means (16, 17) or parts of it is disposed with the microprocessor and/or the black box on elements of the turntable (1) or a lifting means and the signals can be transmitted by remote transmission to a control or regulating means via electric conductors or telecommunication.

4. Turntable having an associated control or regulating means in accordance with claim 1 or any one of the following claims, **characterised in that** the zero point position is given when the drive roller (10, 11) is positioned within a predefined rest angle which is preferably in the middle of rest angle (α), where a deviation of more than five degrees from the zero point position is corrected automatically by the control or regulating means in order to regain the ideal zero point position in the middle of the rest angle at the next revolution of the drive roller (10, 11).

5. Turntable having an associated control or regulating means in accordance with claim 4, **characterised in that** the turntable control means receives a direction-dependent starting signal such as "Forward on" or "Back on" from a superordinate control or regulating means when the turntable (1) has to turn and also a signal such as "Slow on" when the turntable (1) has to turn at the low speed, whereupon the turntable control means or the regulating means checks the movement clearances such as no overrun, position forward/back for the required direction not yet reached, where after movement clearance the turntable (1) is turned and on leaving the rest angle the "In position" output is cut out.

6. Turntable having an associated control or regulating means in accordance with claim 5, **characterised in that** the cut-out for the turntable movement when the precalculated switch point, the "Forward start" or "Back start" output is shut off, where on turntable movement zero and when the drive roller (10, 11) is positioned within the rest angle the "In position" output is switched on by the turntable control means and on overrunning the rest angle the "Overrun forward" or "Overrun back" output is switched on.

7. Turntable having an associated control or regulating means in accordance with claim 5 or 6, **characterised in that** the "Forwards on" or "Backwards on" start signal is switched on throughout the entire turntable movement.

8. Turntable having an associated control or regulating means in accordance with claim 4 or any one of claims 5 to 7, **characterised in that** during the initial start-up or after replacement of instruments cut-out takes place with the default value of ten degrees for "Fast" and five degrees for "Slow" from the ideal zero-point position and the specific cut-out point for each turntable (1) is calculated and stored by the difference from the ideal zero position.

9. Turntable having an associated control or regulating means in accordance with claim 4 or any one of claims 5 to 8, **characterised in that** the turning speed of the drive roller (10, 11) is recorded and stored.

10. Turntable having an associated control or regulating means in accordance with claim 4 or any one of claims 5 to 8, **characterised in that** the inductive measuring means (16, 17) automatically records the braking position with an automatic wear reregulating means and automatic load-dependency regulating means in a control or regulating means.

11. Turntable having an associated control or regulating means in accordance with claim 4 or any one of claims 5 to 10, **characterised in that** the microprocessor records the statistical monitoring of the turntable (1) with regard to cycle times and stores it in a microprocessor.

12. Turntable having an associated control or regulating means in accordance with claim 4 or any one of claims 5 to 11, **characterised in that** the turning speed of the drive roller (10, 11) is stored in the microprocessor.

13. Turntable having an associated control or regulating means in accordance with claim 4 or any one of claims 5 to 12, **characterised in that** the number of emergency stops and number of connection operations from fast to slow movement and the other way about is recalled and stored.

14. Turntable having an associated control or regulating means in accordance with claim 4 or any one of claims 5 to 12, **characterised in that** the inductive measuring means (16, 17) continuously records the turning movements of the drive roller (10, 11) with the microprocessor and that enables limit values to be set before and after the ideal zero position.

## Revendications

1. Plateau tournant comprenant une commande ou régulation afférente, un cylindre d'entraînement (10, 11) entraîné rotativement par un entraînement (4) motorisé, sachant que le cylindre d'entraînement (10, 11) présente une gorge d'entraînement (12) dans laquelle engrènent des goujons à cran ou goujons à galet (13), sachant que la caractéristique du mouvement telle que l'accélération, le freinage et divers mouvements rotatifs d'un plateau (2) dépendent de la géométrie de la gorge d'entraînement (12), et que le plateau (2) sert à recevoir des pièces à usiner, laquelle gorge déplace pas à pas, de façon pilotée, le plateau (2) jusqu'en position d'usinage ou en position de réception pièce, ou en position d'évacuation de pièce, **caractérisé en ce qu'**au cylindre d'entraînement (10, 11) est attribué un élément d'actionnement (16) qui tourne avec le cylindre d'entraînement (10, 11) et masque un élément (17) capteur annulaire inductif configuré en support comportant plusieurs capteurs (18, 19, 20), sachant que l'élément d'actionnement (16) et l'élément (17) capteur annulaire forment un dispositif de mesure inductif (16, 17), sachant que l'élément (17) capteur annulaire ceinture le cylindre d'entraînement (10, 11) et l'élément d'actionnement (16) en laissant un écart interstitiel, et saisit la position du cylindre d'entraînement (10, 11) par mesure inductive sur 360°, et qu'il retransmet les signaux captés à un microprocesseur ou plusieurs microprocesseurs, lequel ou lesquels participe(nt) à la commande ou à la régulation, sachant que le microprocesseur concerné transforme les données et/ou les enregistre et analyse puis les transmet à la commande ou à la régulation qui surveille le franchissement d'une position zéro (22), sachant que pendant la rotation à l'intérieur d'un angle de repos (□) un moteur électrique (4) est éteint puis rallumé en fonction de la charge et de la vitesse, de sorte que sont présents des points de commutation séparés pour les mouvements de rotation «rapide» et «lents », avec une boîte noire affectée fonctionnellement à l'élément (17) capteur annulaire, boîte qui est intégrée dans la commande ou la régulation du plateau tournant et présente des applications spécifiques au client, sachant que la boîte noire reçoit des signaux entrants du dispositif de mesure inductif sous la forme de valeur analogique ou de signal série, et qu'elle saisit de la sorte le sens de rotation, la position zéro (22) et la vitesse de rotation ainsi que d'éventuelles valeurs de tolérance, et **en ce que** dans la boîte noire peuvent être programmés et enregistrés des paramètres logiciels harmonisables avec les desideratas respectifs des clients.

2. Plateau tournant avec commande ou régulation afférente selon la revendication 1, **caractérisé en ce que** le microprocesseur forme une unité constructive avec la boîte noire et/ou des pièces du dispositif de mesure inductif (16, 17).

3. Plateau tournant avec commande ou régulation afférente selon la revendication 1 ou 2, **caractérisé en ce que** le dispositif de mesure inductif (16, 17) ou certaines parties de celui-ci est/sont agencé(es) avec le microprocesseur et/ou la boîte noire contre des éléments du plateau tournant (1) ou d'un dispositif de levage, et que les signaux peuvent, par transmission à distance, être communiqués via des lignes électriques ou par télécommunication à un équipement de commande ou de régulation.

4. Plateau tournant avec commande ou régulation afférente selon la revendication 1 ou l'une des revendications suivantes, **caractérisé en ce qu'**il y a présence de la position sur le point zéro lorsque le cylindre d'entraînement (10, 11) se trouve à l'intérieur d'un angle de repos donné, lequel se trouve de préférence au milieu de l'angle de repos (□), sachant qu'une dérive de plus de cinq degrés par rapport au réglage du point zéro est automatiquement corrigée par la commande ou la régulation afin de parvenir à nouveau au réglage idéal du point zéro au milieu de l'angle de repos lorsque le cylindre d'entraînement (10, 11) exécute la rotation suivante.

5. Plateau tournant avec commande ou régulation afférente selon la revendication 4, **caractérisé en ce que** la commande de plateau tournant reçoit d'une commande ou régulation maître un signal de départ dépendant du sens, du genre « Marche en avant » ou « Marche en arrière » lorsque le plateau (1) doit tourner, et en plus un signal du genre « Marche lente » lorsque le plateau (1) doit tourner à basse vitesse, ce après quoi la commande ou la régulation du plateau tournant vérifie pour chaque sens respectif les autorisations de déplacement dont l'absence de dépassement, position pas encore atteinte en marche avant/arrière, sachant qu'après que l'autorisation de marche a été donnée le plateau tournant (1) est entraîné rotativement et qu'une fois quitté l'angle de repos a lieu l'extinction de la sortie « En position ».

6. Plateau tournant avec commande ou régulation afférente selon la revendication 5, **caractérisé en ce que** lorsqu'est désactivé le mouvement du plateau de rotation une fois atteint le point de commutation antérieurement calculé, l'extinction de la sortie «Marche en avant» ou « Marche en arrière » a lieu, sachant que lorsque le mouvement du plateau tournant est zéro et lorsque le cylindre d'entraînement (10, 11) se trouve dans l'angle de repos, la commande de plateau tournant enclenche la sortie «En position» et lorsqu'est franchi l'angle de repos a lieu l'enclenchement de la sortie «Dépassement en marche avant» ou «Dépassement en marche arrière».

7. Plateau tournant avec commande ou régulation afférente selon la revendication 5 ou 6, **caractérisé en ce que** le signal de démarrage «Marche en avant» ou «Marche en arrière» reste allumé pendant tout le déplacement du plateau tournant.

8. Plateau tournant avec commande ou régulation afférente selon la revendication 4 ou l'une des revendications 5 à 7, **caractérisé en ce que** lors de la première mise en service ou après un changement d'appareil, l'extinction a lieu avec la valeur par défaut de dix de degrés pour «Marche rapide» et de cinq degrés pour «Marche lente» par rapport au réglage idéal du point zéro, et que le point de coupure spécifique de chaque plateau tournant (1) est déterminé et enregistré au moyen de la différence par rapport au réglage idéal du point zéro.

9. Plateau tournant avec commande ou régulation afférente selon la revendication 4 ou l'une des revendications 5 à 8, **caractérisé en ce que** la vitesse de rotation du cylindre d'entraînement (10, 11) est saisie et enregistrée.

10. Plateau tournant avec commande ou régulation afférente selon la revendication 4 ou l'une des revendications 5 à 8, **caractérisé en ce que** le système de mesure inductif (16, 17) saisit automatiquement, dans un dispositif de commande ou de régulation, la position de freinage avec rattrapage automatique de l'usure et régulation automatique en fonction de la charge.

11. Plateau tournant avec commande ou régulation afférente selon la revendication 4 ou l'une des revendications 5 à 10, **caractérisé en ce que** le microprocesseur surveille statistiquement le plateau tournant (1) relativement aux temps de cycle, et les enregistre dans un microprocesseur.

12. Plateau tournant avec commande ou régulation afférente selon la revendication 4 ou l'une des revendications 5 à 11, **caractérisé en ce que** la vitesse de rotation du cylindre d'entraînement (10, 11) est enregistrée dans le microprocesseur.

13. Plateau tournant avec commande ou régulation afférente selon la revendication 4 ou l'une des revendications 5 à 12, **caractérisé en ce que** le nombre d'arrêts d'urgence et le nombre d'opérations de conjonction pour passer de la marche rapide à la marche lente ou inversement sont appelés et enregistrés.

14. Plateau tournant avec commande ou régulation afférente selon la revendication 4 ou l'une des revendications 5 à 12, **caractérisé en ce que** le système de mesure inductif (16, 17) avec la micromémoire saisit constamment les mouvements rotatifs du cylindre d'entraînement (10, 11) et que cela permet de régler des valeurs limites en-deçà et au-delà de la position zéro idéale.
